(19) Europäisches Patentamt
European Patent Office
Office européen des brevets

(11) **EP 2 153 326 B1**

(12) **FASCICULE DE BREVET EUROPEEN**

(45) Date de publication et mention de la délivrance du brevet:
**06.03.2019 Bulletin 2019/10**

(21) Numéro de dépôt: **08805567.8**

(22) Date de dépôt: **13.05.2008**

(51) Int Cl.:
**G06F 11/07** *(2006.01)*

(86) Numéro de dépôt international:
**PCT/FR2008/000663**

(87) Numéro de publication internationale:
**WO 2008/152249 (18.12.2008 Gazette 2008/51)**

(54) **PROCÉDÉ ET DISPOSITIF DE SURVEILLANCE DE SYSTÈMES AVIONIQUES RELIÉS À UN MÉDIA PARTAGÉ**

VERFAHREN UND VORRICHTUNG ZUR ÜBERWACHUNG EINES LUFTFAHRTELEKTRONIKSYSTEMS MIT ANBINDUNG AN EIN GEMEINSAM GENUTZTES MEDIUM

METHOD AND DEVICE FOR MONITORING AVIONICS SYSTEMS CONNECTED TO A SHARED MEDIUM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.05.2007 FR 0755387**

(43) Date de publication de la demande:
**17.02.2010 Bulletin 2010/07**

(73) Titulaire: **AIRBUS OPERATIONS**
**31060 Toulouse (FR)**

(72) Inventeurs:
- **CAMUS, Jean-Michel**
  **31650 Saint-Orens de Gameville (FR)**
- **GRIEU, Jérôme**
  **31200 Toulouse (FR)**
- **CASES, Fabien**
  **31500 Toulouse (FR)**
- **GRIS, Christine**
  **31000 Toulouse (FR)**
- **RINGEARD, Patrick**
  **31530 Lasserre (FR)**

(74) Mandataire: **Santarelli**
**49, avenue des Champs-Elysées**
**75008 Paris (FR)**

(56) Documents cités:
**WO-A-2007/031426     FR-A- 2 891 379**

- **SAGASPE L ET AL: "Safe Allocation of Avionics Shared Resources" HIGH-ASSURANCE SYSTEMS ENGINEERING, 2005. HASE 2005. NINTH IEEE INTERNATIONAL SYMPOSIUM ON HEIDELBERG, GERMANY 12-14 OCT. 2005, PISCATAWAY, NJ, USA,IEEE, 12 octobre 2005 (2005-10-12), pages 25-33, XP010883029 ISBN: 0-7695-2377-3**
- **JACK, H: "Automating Manufacturing Systems with PLCs: 6. Boolean Logic Design" no. 5.0, 4 mai 2007 (2007-05-04), pages I,II,6.1-6.39, XP002468120 Extrait de l'Internet: URL:http://claymore.engineer.gvsu.edu/~jackh/books/plcs/pdf/plcbook5_0.pdf>**

**Description**

La présente invention concerne la fiabilité des systèmes avioniques et plus particulièrement un procédé et un dispositif de surveillance de systèmes avioniques reliés à un média partagé.

La fiabilité des systèmes avioniques est au centre des préoccupations des concepteurs d'aéronefs. Il est généralement admis qu'une redondance des équipements clés des aéronefs est nécessaire pour assurer les fonctions requises malgré la défaillance d'un système ainsi que pour comparer le comportement des systèmes et détecter rapidement une éventuelle défaillance.

L'utilisation de systèmes informatiques dans les aéronefs a conduit les concepteurs à mettre en oeuvre des réseaux informatiques pour la transmission d'informations et de commandes entre les systèmes opérationnels. Les réseaux informatiques sont ici considérés comme des médias de communication partagés utilisés pour échanger des données. La capacité de ces médias est déterminée par les caractéristiques des données transmises, notamment leur volume et leur vitesse de transmission.

A titre d'illustration, l'article de SAGASPE L. et al. « Safe allocation of avionics shared ressource », 2005, divulgue une méthode pour allouer, dans un système avionique, des ressources partagées entre plusieurs composants. Le procédé décrit met en oeuvre trois étapes distinctes :

- la construction d'un modèle de propagation des erreurs à partir d'une description fonctionnelle du système ;
- la détermination des contraintes de sécurité et la détermination des contraintes d'allocation des ressources partagées en résultant ; et,
- l'allocation des ressources partagées.

Le modèle de propagation des erreurs est utilisé pour allouer les ressources partagées en respectant les contraintes de sécurité.

Notamment pour faire face à l'augmentation du nombre de données transmises et aux vitesses de transmissions requises, il peut aujourd'hui s'avérer nécessaire d'utiliser des composants actifs dans les réseaux informatiques, par exemple des commutateurs. L'utilisation de composants actifs permet d'optimiser le transfert des données selon les paramètres liés à ces données tels que leur nature et selon l'état du réseau de communication, notamment sa charge.

Alors que l'utilisation de composants passifs dans les réseaux informatiques d'aéronefs est considérée comme fiable (la fiabilité de ces composants est généralement supérieure à celle des systèmes avioniques), l'utilisation de composants actifs peut induire une baisse de la fiabilité globale des systèmes avioniques du fait de leur fiabilité.

L'invention permet de résoudre au moins un des problèmes exposés précédemment. En particulier, l'invention permet de prendre en compte des pannes d'un élément d'un média de communication partagé dans le traitement de la surveillance d'un ensemble de systèmes avioniques réalisant des fonctions opérationnelles, reliés à ce média partagé.

L'invention a ainsi pour objet un procédé conforme à l'objet de la revendication 1.

Le procédé selon l'invention permet ainsi de s'affranchir de la combinatoire des configurations de panne du média de communication, de simplifier l'analyse des effets des pannes du média de communication, et d'exprimer les effets des pannes du média de communication d'un point de vue fonctionnel. L'utilisation d'une forme de représentation unique permet de simplifier la spécification et l'implémentation de la logique associée.

Le fait de ne pas définir des alarmes pour chacun des états du média de communication mais d'ajouter à la logique déjà définie par les systèmes opérationnels une logique prenant en compte ces états permet de limiter l'effort de conception des alarmes en se focalisant sur les effets opérationnels et non sur les modalités d'implémentation architecturales tout en ne dégradant pas le taux de fausse alarmes. De plus, les évolutions de type libellé des alarmes par les systèmes opérationnels n'impactant pas la logique d'activation, le processus industriel de maintien à jour des alarmes est simplifié.

De façon avantageuse, ladite détermination de l'état dudit au moins un élément dudit média de communication est réalisée à l'aide de moyens de communication indépendants dudit média de communication pour améliorer la fiabilité globale et limiter les perturbations du média de communication.

Selon un mode de réalisation particulier, ladite étape de sélection d'une alarme comprend les étapes suivantes,

- détermination d'une panne dudit au moins un élément dudit média de communication ; et,
- si ladite panne dudit au moins un élément dudit média de communication a un impact sur le fonctionnement dudit au moins un système avionique : sélection et activation d'une alarme liée audit impact sur la fonction dudit au moins un système avionique.

Le procédé selon l'invention permet ainsi de simplifier l'analyse des conséquences de pannes du média de communication sur les systèmes avioniques.

L'invention permet ainsi de distinguer les pannes ayant un impact direct sur les systèmes avioniques des autres pannes.

Toujours selon un mode de réalisation particulier, le procédé comprenant en outre les étapes suivantes,

- réception d'une indication relative au fonctionnement de moyens de surveillance, lesdits moyens de surveillance mettant en oeuvre un procédé similaire audit procédé de surveillance ; et,
- évaluation de la surveillance dudit au moins un système avionique selon ladite indication relative au fonctionnement desdits moyens de surveillance et au dit indicateur d'état dudit média de communication.

L'analyse de la dégradation éventuelle de la performance de surveillance permet ainsi de diriger l'opérateur vers des moyens alternatifs en fonction de la criticité de la fonction opérationnelle si nécessaire.

De façon avantageuse, le procédé comprend en outre une étape de confirmation dudit indicateur d'état dudit média de communication. Selon un mode de réalisation particulier, ladite étape de confirmation est basée sur au moins une information reçue dudit au moins un système avionique.

L'invention permet ainsi de privilégier les informations positives en considérant qu'un système opérationnel est à même de déterminer son état fonctionnel et que l'état perçu du média de communication peut être erroné.

Avantageusement, chacune desdites alarmes est définie par une logique propre audit au moins un système avionique à laquelle contribue ledit indicateur d'état dudit média de communication si celui-ci est pertinent pour simplifier l'implémentation.

L'invention a aussi pour objet un dispositif dans un aéronef comprenant des moyens adaptés à la mise en oeuvre de chacune des étapes du procédé décrit précédemment.

D'autres avantages, buts et caractéristiques de la présente invention ressortent de la description détaillée qui suit, faite à titre d'exemple non limitatif, au regard des dessins annexés dans lesquels :

- la figure 1, comprenant les figures 1a et 1b, représente schématiquement un média de communication ainsi que des moyens d'observation des éléments actifs de ce média, respectivement ;
- la figure 2 représente un exemple d'implémentation d'un circuit logique pouvant être utilisé pour l'activation d'une alerte par un équipement du système de surveillance ;
- la figure 3 présente un exemple de mise en oeuvre de l'invention pour la surveillance d'un système opérationnel de type LGERS (*Landing Gear Extension and Retraction System*) ;
- la figure 4, comprenant les figures 4a et 4b, illustre un exemple de l'algorithme utilisé pour mettre en oeuvre l'invention ; et,
- la figure 5 montre un exemple d'appareil permettant d'implémenter l'invention.

L'invention concerne un système de surveillance centralisé permettant le diagnostic des systèmes opérationnels surveillés et des fonctions réalisées par ces systèmes ainsi que l'élaboration et l'affichage d'alarmes permettant à un opérateur de traiter les situations dégradées résultant des dégradations de ces fonctions.

La redondance du système de surveillance centralisé est de préférence implémentée au moyen de fonctions indépendantes les unes des autres. Le procédé de surveillance du média de communication partagé prend avantageusement en compte cette indépendance tout en assurant la cohérence du comportement de ces fonctions indépendantes.

L'architecture des systèmes opérationnels surveillés comprend un média de communication partagé entre les différents systèmes opérationnels surveillés composé notamment d'un ou de plusieurs éléments actifs tels que des commutateurs. Il convient de noter ici que si le nombre de commutateurs est élevé, le nombre de combinaisons représentant des configurations de pannes possibles est important et qu'une analyse exhaustive détaillée est difficilement envisageable pour des raisons de coût.

Le traitement des pannes détectées varie selon la nature des pannes. Par exemple, seules les fonctions opérationnelles réalisées par les systèmes surveillés nécessitent l'élaboration d'une information en cas de dégradation. En effet, la dégradation de la fonction de communication du média elle-même n'est pas, a priori, une information pertinente pour la conduite du vol. Seule une information liée à l'impact de cette dégradation sur les fonctions opérationnelles utilisatrices du média de communication est pertinente.

La surveillance des systèmes et fonctions opérationnelles associées est avantageusement réalisée au travers du média de communication utilisé pour réaliser les fonctions opérationnelles.

La mise en oeuvre de l'invention comprend deux phases :

- une phase d'analyse préliminaire permettant de modéliser les flux de données et les effets des pannes des systèmes opérationnels et des perturbations des flux de données ; et,
- une phase de surveillance basée sur la modélisation effectuée durant la phase préliminaire.

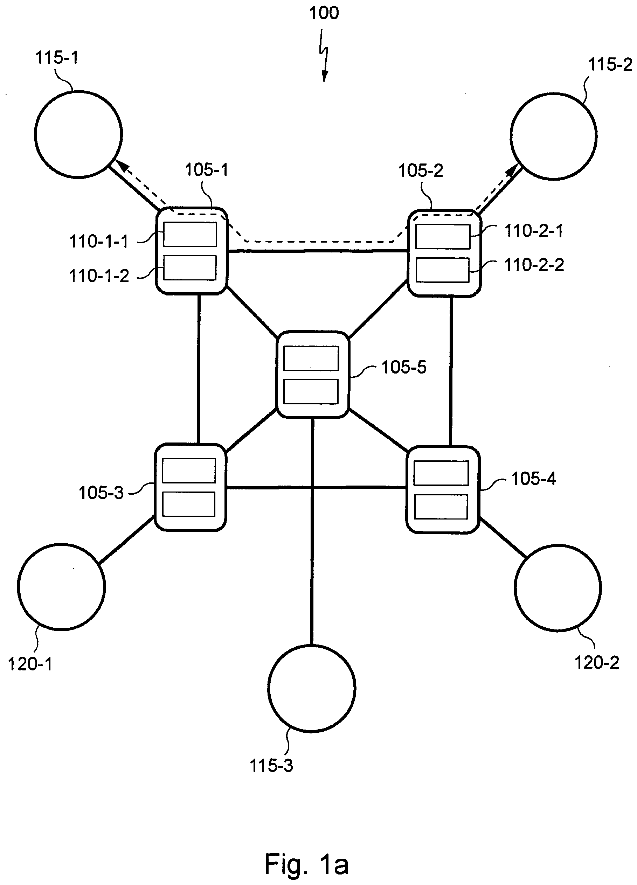

La figure 1a illustre un média de communication partagé sous forme de réseau de communication 100 composé de cinq noeuds 105-1 à 105-5 ainsi que de liaisons entre ces noeuds et entre ces noeuds et les systèmes avioniques et les systèmes de surveillance. Chaque noeud comprend ici deux éléments redondants. Par exemple, le noeud 105-2 comprend les éléments redondants 110-2-1 et 110-2-2. Les éléments sont de préférence connectés entre eux de façon à former deux réseaux locaux, redondants et indépendants, de telle sorte que la panne d'un ou de plusieurs éléments d'un réseau local n'affecte pas les communications entre les systèmes connectés au réseau de communication. Par exemple, l'élément 110-1-1 est relié à l'élément 110-2-1 et l'élément 110-1-2 est relié à l'élément 110-2-2 tandis que l'élément 110-1-1 n'est pas relié à l'élément 110-2-2 et que l'élément 110-1-2 n'est pas relié à l'élément 110-2-1.

L'accès au média de communication partagé se fait à travers un noeud 105-i.

Les flux de données dans le réseau de communication, c'est-à-dire les chemins empruntés au travers du réseau, sont ici déterminés de façon statique pour éviter une reconfiguration des chemins de communication en cas de panne.

Selon l'exemple représenté, trois systèmes opérationnels 115-1 à 115-3 sont reliés au réseau de communication. Pour des raisons de clarté, chaque système opérationnel se compose ici d'un unique équipement.

Le système de surveillance centralisé comprend deux équipements redondants 120-1 et 120-2. Chacun des éléments 120-1 et 120-2 a un fonctionnement autonome du fonctionnement de l'élément redondant. En particulier, les dispositifs d'affichage d'alerte sont différents. Dès que l'un des équipements du système de surveillance détecte une condition ou un ensemble de conditions qui requiert l'affichage d'une alerte, il déclenche l'affichage de celle-ci sans synchronisation ni vérification avec l'équipement redondant du système de surveillance. Il convient de noter que la topologie du réseau de communication illustré sur la figure 1a n'est donnée qu'à titre d'exemple.

L'état du média de communication est analysé par les deux équipements 120-1 et 120-2 du système de surveillance centralisé.

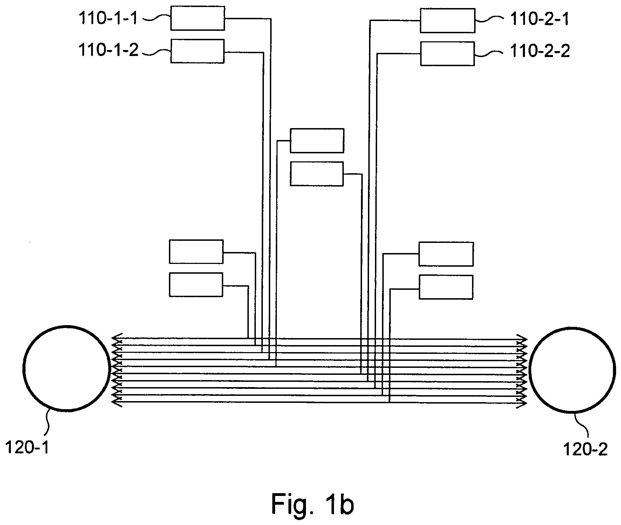

Selon un mode de réalisation particulier illustré sur la figure 1b, chaque équipement du système de surveillance centralisé reçoit un indicateur d'état de chaque noeud de communication 105-i, par exemple une valeur booléenne, au moyen d'un indicateur d'état câblé, c'est à dire à l'aide d'un lien spécifique entre chaque équipement du système de surveillance et chaque noeud du média de communication partagé, différent du média partagé. A titre d'illustration, l'état de chaque noeud peut prendre l'une des valeurs suivantes:

- *OK* si l'indicateur d'état signale un fonctionnement normal ; et,
- *KO* si l'indicateur d'état signale une panne.

En utilisant ces états, la notation 110-i-j_OK peut être utilisée, par exemple, si l'élément j du noeud 105-i fonctionne correctement. A l'inverse, si l'élément 110-i-j ne fonctionne pas correctement, la notation 110-i-j_KO peut être utilisée.

Comme indiqué précédemment, les flux de communication entre systèmes opérationnels, identifiés par les chemins empruntés au travers du média de communication, sont de préférence prédéterminés. Chaque chemin peut être identifié par la liste des noeuds traversés. Ainsi par exemple, le flux de communication entre les systèmes opérationnels 115-1 et 115-2 à travers les noeuds 105-1 et 105-2 peut être noté CHEM(105-1, 105-2). De même, le flux de communication entre le système opérationnel 115-3 et le média de communication à travers le noeud 105-5 peut être noté CHEM(105-5).

Chaque équipement du système de surveillance centralisé détermine l'état de la fonction de communication à partir de l'état de chacun des éléments constitutifs des noeuds traversés par un flux. Un chemin de communication est considéré comme étant perdu si la configuration de panne des éléments constitutifs du chemin est telle que les deux réseaux locaux redondants sont affectés.

En considérant par exemple le flux de communication entre les systèmes opérationnels 115-1 et 115-2, noté CHEM(105-1, 105-2), le chemin CHEM(105-1, 105-2) peut être opérationnel CHEM(105-1, 105-2)_OK ou en panne CHEM(105-1, 105-2)_KO. L'état du flux de communication CHEM(105-1, 105-2) peut ainsi être déterminé par les relations suivantes,

$$CHEM(105\text{-}1, 105\text{-}2)\_KO = (110\text{-}1\text{-}1\_KO \text{ OU } 110\text{-}2\text{-}1\_KO) \text{ ET}$$

$$(110\text{-}1\text{-}2\_KO \text{ OU } 110\text{-}2\text{-}2\_KO)$$

où 'ET' et 'OU' représentent un 'et logique' et un 'ou logique', respectivement.

Pour chaque système opérationnel et pour chaque alerte associée à ce système, la ou les conditions de panne du système et du média de communication sont déterminées. Ces conditions peuvent être déterminées par analyse fonctionnelle et regroupées dans une table.

Considérons un exemple selon lequel une analyse fonctionnelle du système opérationnel 115-1, indépendante de la structure du réseau de communication, montre qu'une alerte de type 115-1_Alert-Fn1 doit être activée si la fonction interne Fn1 n'est pas disponible ou ne peut pas être exécutée (par exemple si une partie de cette fonction est exécutée par le système opérationnel 115-2 et que ce système opérationnel 115-2 est en panne ou n'est pas accessible).

Ainsi, il est possible d'en déduire que l'alerte de type 115-1_Alert-Fn1 doit être activée dans les conditions suivantes,

- le système opérationnel 115-1 indique aux équipements 120-1 et/ou 120-2 du système de surveillance une panne de la fonction Fn1 à l'aide, par exemple, du message 115-1-Erreur-Fn1 ;
- les équipements 120-1 et/ou 120-2 du système de surveillance ne reçoivent aucun message du système opérationnel 115-1 bien qu'aucune panne ne soit détectée dans le média de communication entre l'élément 115-1 et les équipements 120-1 et 120-2 du système de surveillance ;
- le flux de communication entre le système opérationnel 115-1 et le média de communication est perturbé ; ou,
- le flux de communication entre les systèmes opérationnels 115-1 et 115-2 est perturbé.

Il convient de remarquer que ces conditions sont facilement vérifiées par le système de surveillance. En particulier, la première condition est détecté par les équipements du système de surveillance centralisé par la réception du message 115-1-Erreur-Fn1 au travers du réseau de communication.

La seconde condition est détectée par les équipements du système de surveillance centralisée par l'absence de réception d'un message d'état en provenance du système opérationnel 115-1. Chaque équipement du système de surveillance centralisé s'assure que cette perte n'est pas due à une panne du média de communication en vérifiant que le chemin de communication entre le système opérationnel 115-1 et lui-même n'est pas rompu.

Si la communication entre un système opérationnel et un équipement du système de surveillance centralisé est disponible, les alertes liées à ce système opérationnel sont avantageusement activées sur la base des informations de surveillance reçues du système opérationnel surveillé. En effet, bien que la surveillance du média de communication soit simple et robuste, une perte théorique de flux de communication peut être détecté de façon erronée.

A cet effet, les équipements du système de surveillance centralisé élaborent avantageusement une information de validité de flux de communication basée sur la réception effective, ou non, des informations et non pas sur l'observation de l'état du média de communication. Ainsi, la défaillance d'un flux de communication n'est considérée en tant que telle qu'en l'absence de réception de messages du système opérationnel correspondant.

Par exemple, l'information déterminée par l'équipement 120-1 du système de surveillance selon laquelle l'un des chemins CHEM(105-1), CHEM(105-1, 105-2) ou CHEM(105-1, 105-3) n'est pas valide, doit être confirmée, par exemple par l'absence de réception de messages du système opérationnel 115-1.

Pour chacune des alertes définies dans le système de surveillance centralisé, la logique d'activation de ces alertes prend en compte les conditions d'activation.

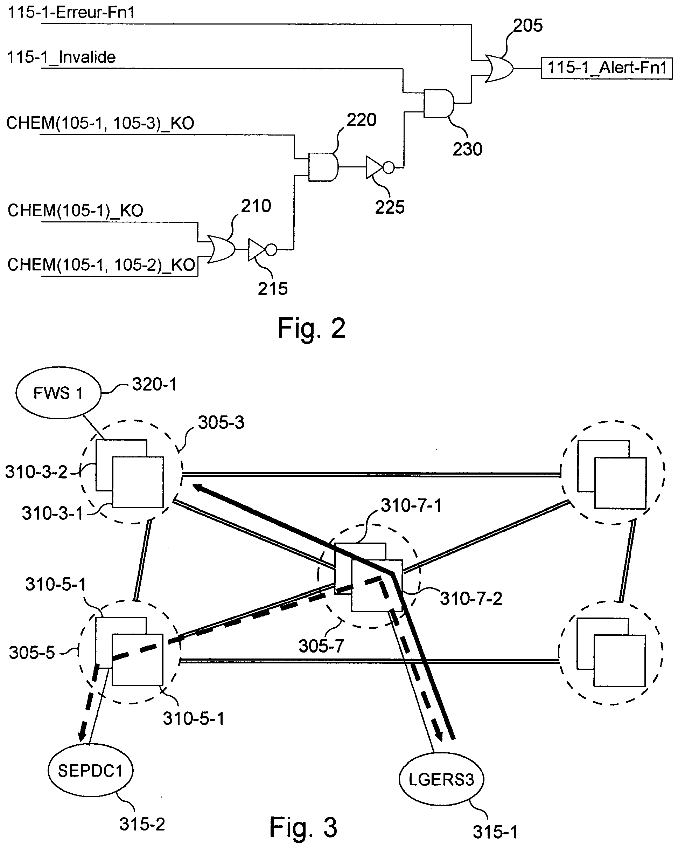

La figure 2 représente un exemple d'implémentation d'un circuit logique 200 pouvant être utilisé pour l'activation de l'alerte 115-1_Alert-Fn1 par l'équipement 120-1 du système de surveillance. Comme illustré par le OU 205, l'alerte 115-1_Alert-Fn1 n'est activée que si l'une ou l'autre des deux conditions suivantes est remplie,

- l'équipement 120-1 du système de surveillance a reçu un message 115-1-Erreur-Fn1 correspondant à l'alerte 115-1_Alert-Fn1 du système opérationnel 115-1 ; ou,
- la combinaison de l'état validé des chemins CHEM(105-1), CHEM(105-1, 105-2) et CHEM(105-1, 105-3) est telle que l'équipement 120-1 du système de surveillance ne peut pas échanger de données avec le système opérationnel 115-1.

La combinaison de l'état des chemins CHEM(105-1), CHEM(105-1, 105-2) et CHEM(105-1, 105-3) consiste ici à effectuer les opérations suivantes,

- déterminer le OU 210 entre les valeurs de CHEM(105-1) et de CHEM(105-1, 105-2) et inverser le résultat dans l'inverseur 215 ;
- déterminer le ET 220 entre la valeur obtenue à la sortie de l'inverseur 215 et la valeur de CHEM(105-1, 105-3) et inverser le résultat dans l'inverseur 225 ; et
- déterminer le ET 230 entre la valeur obtenue à la sortie de l'inverseur 225 et la valeur de la condition de validation 115-1_Invalide (la valeur de 115-1_Invalide est FAUSSE si un message est reçu du système opérationnel 115-1 par l'équipement 120-1 du système de surveillance, sinon elle est VRAIE.

Comme illustré sur la figure 3, l'invention peut être mise en oeuvre, par exemple, pour contrôler un système opérationnel LGERS3 (*Landing Gear Extension and Retraction System*), référencé 315-1, connecté à un noeud 305-7 d'un réseau comprenant les commutateurs 310-7-1 et 310-7-2. Les conditions de pannes sont par exemple les suivantes,

- le LGERS3 315-1 se déclare en panne (variable booléenne LGERS3_FAULT) ;
- le LGERS3 315-1 perd sa connexion au réseau (perte du noeud comprenant les commutateurs 310-7-1 et 310-7-2) ; ou,
- le LGERS3 315-1 perd la communication avec le système opérationnel SEPDC1 (*Supplementary Electrical Power Distribution Center 1*), référencé 315-2, connecté à un noeud 305-5 du réseau comprenant les commutateurs 310-5-1 et 310-5-2. La perte de communication se traduit par la perte du chemin CHEM(305-5, 305-7).

Il convient de noter ici que la troisième condition est incluse dans la seconde.

La flèche en trait gras continu représente la transmission de l'indicateur de statut de LGERS3 315-1 vers le FWS1 320-1 tandis que la flèche en trait gras pointillé représente la communication entre le LGERS3 315-1 et le SEPDC1 315-2.

La première condition est détectée par le FWS1 (*Flight Warning System 1*), référencé 320-1 par réception au travers du média de communication de la valeur de la variable booléenne LGERS3_FAULT émise par le système opérationnel LGERS3 315-1. La seconde condition est caractérisée par la perte des deux éléments du noeud 305-7, c'est-à-dire ici les commutateurs 310-7-1 et 310-7-2. La troisième condition est caractérisée par la perte du chemin de communication CHEM(305-5, 305-7).

Si une panne survient dans les commutateurs 310-3-1 et 310-7-2, le système opérationnel FWS1 320-1 perd la communication avec le système opérationnel LGERS3 315-1. Cependant, l'alerte de panne du système opérationnel LGERS3 315-1 est inhibée car la perte du chemin CHEM(305-3, 305-7) n'est pas une condition de panne de la fonction LGERS3 315-1.

De même, si une panne intervient dans les commutateurs 310-3-1, 310-7-2 et 310-5-1, le système opérationnel FWS1 320-1 perd la communication avec le système opérationnel LGERS3 315-1. Dans ce cas, le système opérationnel FWS1 320-1 déclenche une alerte LGERS3 315-1 car la détection de la perte du chemin CHEM(305-5, 305-7), due ici à une panne des commutateurs 310-5-1 et 310-7-2, est une condition de panne du système opérationnel LGERS3 315-1.

Enfin, si une panne survient dans les commutateurs 310-5-1 et 310-7-2, le système opérationnel FWS1 320-1 reçoit toujours le message d'état du LGERS3 315-1 et une alerte concernant le système opérationnel LGERS3 315-1 n'est déclenchée que si ce message d'état signale un problème sur la fonction LGERS3 315-1.

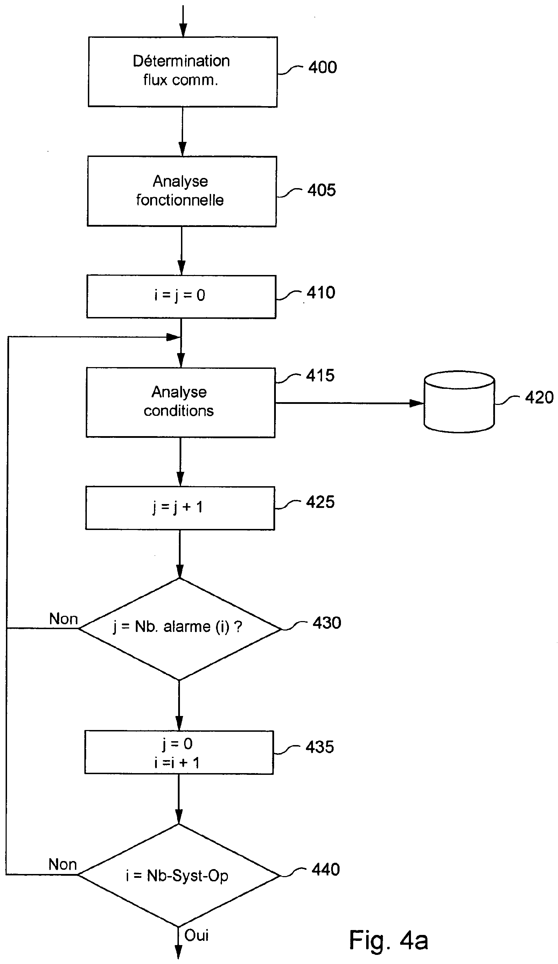

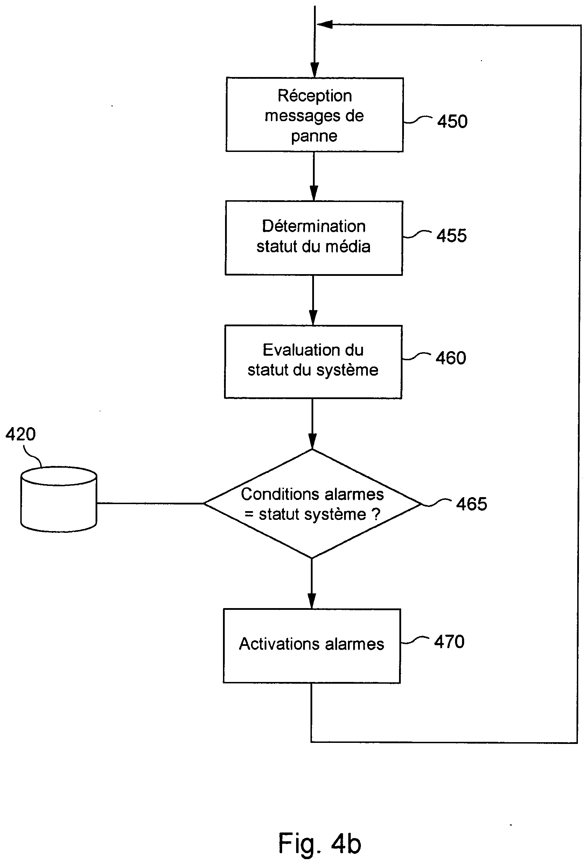

La figure 4, comprenant les figures 4a et 4b, illustre un exemple de l'algorithme utilisé pour mettre en oeuvre l'invention. La figure 4a représente la partie de l'algorithme utilisée durant la phase préliminaire d'analyse tandis que la figure 4b représente la partie de l'algorithme utilisée pour surveiller le média de communication partagé.

Comme illustré sur la figure 4a, après avoir déterminé les flux de communication dans le média de communication partagé (étape 400), une étude fonctionnelle du média de communication partagé est menée (étape 405). Les indexes i et j sont initialisés à zéro (étape 410). La valeur i représente ici l'index du système opérationnel sélectionné alors que la valeur j représente l'index de l'alarme sélectionné du système opérationnel i.

Les conditions de l'alarme j du système opérationnel i sont alors déterminées selon les conditions de panne pour l'alarme j du système opérationnel i et selon l'analyse fonctionnelle du média de communication réalisée (étape 415). A cette fin, les conditions dans lesquelles la panne d'un ou de plusieurs éléments du média de communication doit déclencher l'alarme j du système opérationnel i sont déterminées. L'ensemble des conditions ainsi déterminées est ici mémorisé dans une table 420.

L'index j est alors incrémenté de un (étape 425) et un test est effectué pour déterminé si l'index j est égal au nombre d'alarmes du système opérationnel i (étape 430). Si l'index j n'est pas égal au nombre d'alarmes du système opérationnel i, les deux étapes précédentes (415 et 425) sont répétées.

Si l'index j est égal au nombre d'alarmes du système opérationnel i, l'index j est réinitialisé à zéro et l'index i est incrémenté de un (étape 435). Un test est alors effectué pour déterminer si l'index i est égal au nombre de systèmes opérationnels devant être surveillés (étape 440). Si l'index i n'est pas égal au nombre de systèmes opérationnels devant être surveillés, les étapes 415 à 440 sont répétées. Si au contraire l'index i est égal au nombre de systèmes opérationnels devant être surveillés, la phase préliminaire est terminée, c'est-à-dire que les conditions d'activation des alarmes des systèmes opérationnels à surveiller ont été déterminées.

La figure 4b illustre un exemple de l'algorithme utilisé pour surveiller un média de communication et des systèmes opérationnels afin d'activer une ou plusieurs alarmes si nécessaire.

Les messages émis par les systèmes opérationnels pour signaler une panne sont reçus par le système de surveillance (étape 450) si l'état du média de communication le permet. Simultanément, avant ou après, le système de surveillance détermine le statut du média de communication à partir, par exemple, des indicateurs d'état des noeuds comme décrit précédemment (étape 455).

Ces informations sont utilisées pour établir un statut global du système surveillé (étape 460), c'est-à-dire des systèmes opérationnels et du média de communication. Ce statut est ensuite comparé aux conditions d'activation des alarmes mémorisées, par exemple, dans la table 420 (étape 465). Si les conditions d'activation d'une ou de plusieurs alarmes sont remplies, l'alarme ou les alarmes correspondantes sont activées (étape 470). Les étapes 450 à 470 sont alors répétées pour surveiller le système en continu.

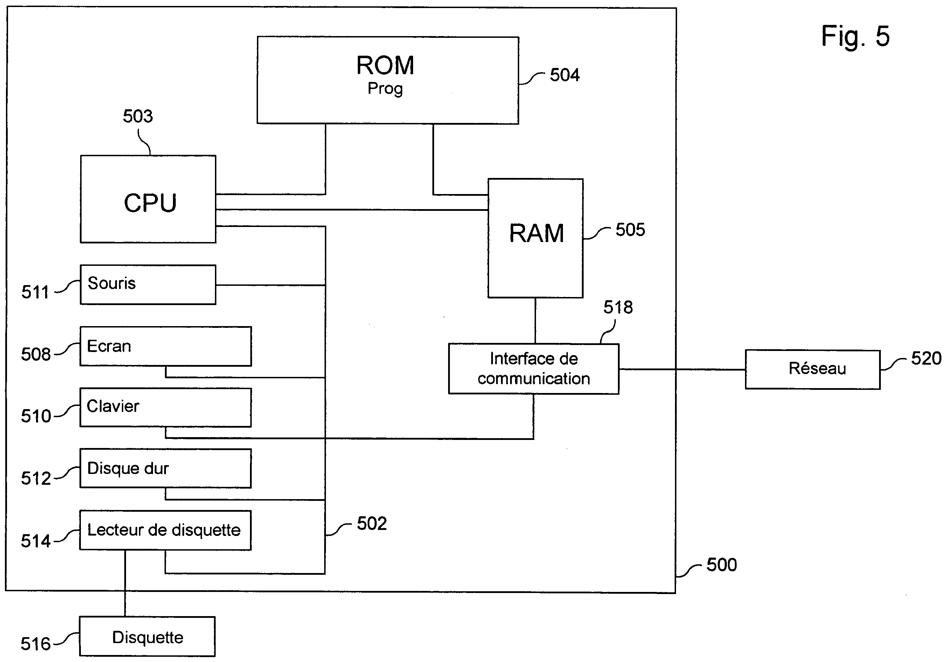

La figure 5 illustre un exemple d'appareil 500 adapté à mettre en oeuvre l'invention, tel qu'un micro-ordinateur. L'appareil 500 est un exemple d'équipement du système de surveillance.

De préférence, l'appareil 500 comporte un bus de communication 502 auquel sont reliées,

- une unité centrale de traitement 503 telle qu'un microprocesseur ;
- une mémoire morte 504 ou *Read Only Memory* (ROM), pouvant comporter un ou plusieurs programmes "Prog" ;
- une mémoire vive 506 ou *Random Access Memrory* (RAM), comportant des registres adaptés à mémoriser des variables et des paramètres créés et modifiés au cours de l'exécution des programmes précités ; et
- une interface de communication 518 reliée à un réseau de communication distribué 520, l'interface étant apte à transmettre et à recevoir des données.

L'appareil 500 peut disposer optionnellement de l'un, de plusieurs ou de tous les dispositifs suivants :

- un écran 508 permettant de visualiser des données et/ou de servir d'interface graphique avec l'utilisateur qui pourra interagir avec les programmes selon l'invention, à l'aide d'un clavier 510 ou de tout autre moyen tel qu'un dispositif de pointage, comme par exemple une souris 511 ou un crayon optique, un écran tactile ou une télécommande ;
- un disque dur 512 pouvant comporter des programmes et/ou des données, notamment des données traitées ou à traiter selon l'invention ;
- un lecteur de disquette 514 adapté à recevoir une disquette 516 et à y lire ou à y écrire des données traitées ou à traiter selon l'invention ; et,
- un lecteur de cartes mémoire adapté à y lire ou à y écrire des données, notamment des données traitées ou à traiter selon l'invention.

Le bus de communication permet la communication et l'interopérabilité entre les différents éléments inclus dans l'appareil 500 ou reliés à lui. La représentation du bus n'est pas limitative et, notamment, l'unité centrale est susceptible de communiquer des instructions à tout élément de l'appareil 500, directement ou par l'intermédiaire d'un autre élément de l'appareil 500.

Le code exécutable du ou des programme(s) permettant à l'appareil 500 de mettre en oeuvre les processus selon l'invention, peut être stocké, par exemple, dans le disque dur 512 ou en mémoire morte 504.

Selon une variante, la disquette 516, peut contenir des données ainsi que le code exécutable des programmes précités qui, une fois lu par l'appareil 500, peuvent être stockés dans le disque dur 512.

Alternativement, le code exécutable des programmes peut être reçu par l'intermédiaire du réseau de communication 520, via l'interface 518, pour être stocké de façon identique à celle décrite précédemment.

Les disquettes peuvent être remplacées par tout support d'information tel que, par exemple, un disque compact (CD-ROM) ou une carte mémoire. De manière générale, un moyen de stockage d'information, lisible par un ordinateur ou par un microprocesseur, intégré ou non à l'appareil, éventuellement amovible, est adapté à mémoriser un ou plusieurs programmes dont l'exécution permet la mise en oeuvre du procédé selon l'invention.

De manière plus générale, le ou les programmes pourront être chargés dans un des moyens de stockage de l'appareil 500 avant d'être exécutés.

L'unité centrale 503 contrôle l'exécution des instructions ou portions de code logiciel du ou des programme(s) selon l'invention, instructions qui sont stockées dans le disque dur 512, dans la mémoire morte 504 ou dans les autres éléments de stockage précités. Lors de la mise sous tension, le ou les programmes stockés dans une mémoire non volatile, par exemple le disque dur 512 ou la mémoire morte 504, sont transférés dans la mémoire vive 506 (RAM), qui contient alors le code exécutable du ou des programme(s) selon l'invention, ainsi que des registres pour mémoriser les variables et les paramètres nécessaires à la mise en oeuvre de l'invention.

Il convient de noter que l'appareil comportant le dispositif selon l'invention peut également être un appareil programmé. Les instructions du ou des programme(s) mettant en oeuvre l'invention peuvent, par exemple, être implémentées dans un circuit intégré programmable ou spécifique (*Application-Specific Integrated Circuit*, ASIC).

Naturellement, pour satisfaire des besoins spécifiques, une personne compétente dans le domaine de l'invention pourra appliquer des modifications dans la description précédente.

## Revendications

1. Procédé de surveillance d'au moins un système avionique relié à un média de communication partagé comprenant différents systèmes opérationnels (115-1, 115-2) surveillés composés notamment d'un ou plusieurs éléments actifs, ce procédé étant **caractérisé en ce qu'**il comprend les deux phases suivantes :

- -une phase d'analyse préliminaire comprenant les étapes suivantes : détermination des flux de communication (400) dans le média de communication partagé ;
- analyse fonctionnelle du média de communication partagé (405) ;
- analyse des conditions d'activation d'alarme (415) pour chaque alarme dudit système opérationnel ;
- mémorisation (420) desdites conditions d'activation de ladite au moins une alarme et d'une identification de ladite au moins une alarme ;
- une deuxième phase de surveillance basée sur la modélisation durant la phase préliminaire comprenant les étapes suivantes :

   - réception de messages de panne (450) des systèmes opérationnels ;
   - détermination de l'état dudit au moins un élément actif dudit média de communication à l'aide d'un lien spécifique différent dudit média de communication ;
   - évaluation (455) d'un indicateur d'état dudit média de communication à partir dudit état dudit au moins un élément actif dudit média de communication et à partir des conditions d'activation d'alarmes mémorisées dans la phase d'analyse ; et,
   - sélection et activation (470) d'une alarme selon ledit état évalué dudit média de communication et selon des conditions d'activation de ladite alarme et d'une identification de ladite alarme.

2. Procédé selon la revendication 1 **caractérisé en ce que** ladite étape de sélection d'une alarme comprend les étapes suivantes,

   - détermination d'une panne dudit au moins un élément actif dudit média de communication ; et,
   - si ladite panne dudit au moins un élément actif dudit média de communication a un impact sur le fonctionnement dudit au moins un système avionique : sélection et activation d'une alarme liée audit impact sur la fonction dudit au moins un système avionique.

3. Procédé selon la revendication 2 **caractérisé en ce que** si ladite panne dudit au moins un élément actif dudit média de communication n'a pas d'impact sur le fonctionnement dudit au moins un système avionique et si ladite panne affecte la communication entre ledit au moins un système avionique et les moyens mettant en oeuvre ledit procédé de surveillance, ledit procédé comprend en outre des étapes de sélection et d'activation d'une alerte indiquant que ledit au moins un système avionique n'est plus surveillé.

4. Procédé selon l'une quelconque des revendications 1 à 3 comprenant en outre les étapes suivantes,

   - réception d'une indication relative au fonctionnement de moyens de surveillance, lesdits moyens de surveillance mettant en oeuvre un procédé dont les étapes sont similaires à chacune des étapes dudit procédé de surveillance ; et,
   - évaluation de la surveillance dudit au moins un système avionique selon ladite indication relative au fonctionnement desdits moyens de surveillance et au dit indicateur d'état dudit média de communication.

5. Procédé selon l'une quelconque des revendications 1 à 4 comprenant en outre une étape de confirmation dudit indicateur d'état dudit média de communication.

6. Procédé selon la revendication 5 **caractérisé en ce que** ladite étape de confirmation est basée sur au moins une information reçue dudit au moins un système avionique.

7. Procédé selon l'une quelconque des revendications 1 à 6 **caractérisé en ce que** chacune desdites alarmes est définie par une logique propre audit au moins un système avionique à laquelle contribue ledit indicateur d'état dudit média de communication si celui-ci est pertinent.

8. Dispositif dans un aéronef comprenant des moyens adaptés à la mise en oeuvre de chacune des étapes du procédé selon l'une quelconque des revendications précédentes.


**Patentansprüche**

1. Verfahren zur Überwachung mindestens eines Avioniksystems, das mit einem gemeinsam genutzten Kommunikationsmedium verbunden ist, welches verschiedene überwachte operative Systeme (115-1, 115-2) enthält, die insbesondere aus einem oder mehreren aktiven Elementen zusammengesetzt sind, wobei dieses Verfahren **dadurch gekennzeichnet ist, dass** es die folgenden zwei Phasen enthält:

- eine Phase einer vorhergehenden Analyse, die die folgenden Schritte enthält:

- Bestimmung der Kommunikationsflüsse (400) im gemeinsam genutzten Kommunikationsmedium;
- Funktionsanalyse des gemeinsam genutzten Kommunikationsmediums (405);
- Analyse der Alarmaktivierungsbedingungen (415) für jeden Alarm des operativen Systems;
- Speichern (420) der Aktivierungsbedingungen des mindestens einen Alarms und einer Identifizierung des mindestens einen Alarms;

- eine zweite Phase der Überwachung basierend auf der Modellbildung während der vorhergehenden Phase, die die folgenden Schritte enthält:

- Empfang von Störungsnachrichten (450) der operativen Systeme;
- Bestimmung des Zustands des mindestens einen aktiven Elements des Kommunikationsmediums mit Hilfe eines speziellen Links, der sich vom Kommunikationsmedium unterscheidet;
- Bewertung (455) eines Zustandsindikators des Kommunikationsmediums ausgehend vom Zustand des mindestens einen aktiven Elements des Kommunikationsmediums und ausgehend von den Aktivierungsbedingungen von Alarmen, die in der Analysephase gespeichert werden; und
- Auswahl und Aktivierung (470) eines Alarms gemäß dem bewerteten Zustand des Kommunikationsmediums und gemäß den Aktivierungsbedingungen des Alarms und einer Identifizierung des Alarms.

2. Verfahren nach Anspruch 1, **dadurch gekennzeichnet, dass** der Auswahlschritt eines Alarms die folgenden Schritte enthält

- Bestimmung einer Störung des mindestens einen aktiven Elements des Kommunikationsmediums; und
- wenn die Störung des mindestens einen aktiven Elements des Kommunikationsmediums eine Auswirkung auf den Betrieb des mindestens einen Avioniksystems hat: Auswahl und Aktivierung eines Alarms, der mit der Auswirkung auf die Funktion des mindestens einen Avioniksystems verbunden ist.

3. Verfahren nach Anspruch 2, **dadurch gekennzeichnet, dass**, wenn die Störung des mindestens einen aktiven Elements des Kommunikationsmediums keine Auswirkung auf den Betrieb des mindestens einen Avioniksystems hat, und wenn die Störung die Kommunikation zwischen dem mindestens einen Avioniksystem und den Einrichtungen beeinflusst, die das Überwachungsverfahren durchführen, das Verfahren außerdem Schritte der Auswahl und Aktivierung einer Warnung enthält, die anzeigt, dass das mindestens eine Avioniksystem nicht mehr überwacht wird.

4. Verfahren nach einem der Ansprüche 1 bis 3, das außerdem die folgenden Schritte enthält

- Empfang einer Angabe bezüglich des Betriebs von Überwachungseinrichtungen, wobei die Überwachungseinrichtungen ein Verfahren durchführen, dessen Schritte jedem der Schritte des Überwachungsverfahrens vergleichbar sind; und
- Bewertung der Überwachung des mindestens einen Avioniksystems gemäß der Angabe bezüglich des Betriebs der Überwachungseinrichtungen und des Zustandsindikators des Kommunikationsmediums.

5. Verfahren nach einem der Ansprüche 1 bis 4, das außerdem einen Schritt der Bestätigung des Zustandsindikators des Kommunikationsmediums enthält.

6. Verfahren nach Anspruch 5, **dadurch gekennzeichnet, dass** der Bestätigungsschritt auf mindestens einer Information basiert, die vom mindestens einen Avioniksystem empfangen wird.

7. Verfahren nach einem der Ansprüche 1 bis 6, **dadurch gekennzeichnet, dass** jeder der Alarme durch eine dem mindestens einen Avioniksystem eigene Logik definiert wird, zu der der Zustandsindikator des Kommunikationsmediums beiträgt, wenn dieser relevant ist.

8. Vorrichtung in einem Luftfahrzeug, die Einrichtungen enthält, die für die Durchführung jedes der Schritte des Verfahrens nach einem der vorhergehenden Ansprüche geeignet sind.

**Claims**

1. Method for monitoring at least one avionics system linked to a shared communication medium comprising various monitored operational systems (115-1, 115-2) composed in particular of one or more active elements, this method being **characterised in that** it comprises the following two phases:

   - a preliminary analysis phase comprising the following steps: determination of the communication streams (400) in the shared communication medium;
   - functional analysis of the shared communication medium (405);
   - analysis of the conditions of alarm activation (415) for each alarm of the said operational system;
   - storage (420) of the said conditions of activation of the said at least one alarm and of an identification of the said at least one alarm;
   - a second monitoring phase based on the modelling during the preliminary phase comprising the following steps:

      - reception of fault messages (450) in respect of the operational systems;
      - determination of the state of the said at least one active element of the said communication medium with the aid of a different specific link from the said communication medium;
      - evaluation (455) of a state indicator of the said communication medium on the basis of the said state of the said at least one active element of the said communication medium and on the basis of the conditions of activation of alarms stored in the analysis phase; and,
      - selection and activation (470) of an alarm according to the said evaluated state of the said communication medium and according to conditions of activation of the said alarm and of an identification of the said alarm.

2. Method according to claim 1, **characterised in that** the said step of selecting an alarm comprises the following steps,

   - determination of a fault of the said at least one active element of the said communication medium; and,
   - if the said fault of the said at least one active element of the said communication medium has an impact on the operation of the said at least one avionics system: selection and activation of an alarm related to the said impact on the function of the said at least one avionics system.

3. Method according to claim 2, **characterised in that** if the said fault of the said at least one active element of the said communication medium does not have an impact on the operation of the said at least one avionics system and if the said fault affects the communication between the said at least one avionics system and the means implementing the said monitoring method, the said method furthermore comprises steps of selecting and activating an alert indicating that the said at least one avionics system is no longer monitored.

4. Method according to any one of claims 1 to 3, furthermore comprising the following steps,

   - reception of an indication relating to the operation of monitoring means, the said monitoring means implementing a method whose steps are similar to each of the steps of the said monitoring method; and,
   - evaluation of the monitoring of the said at least one avionics system according to the said indication relating to the operation of the said monitoring means and to the said state indicator of the said communication medium.

5. Method according to any one of claims 1 to 4, furthermore comprising a step of confirming the said state indicator of the said communication medium.

6. Method according to claim 5, **characterised in that** the said confirmation step is based on at least one information item received from the said at least one avionics system.

7. Method according to any one of claims 1 to 6, **characterised in that** each of the said alarms is defined by a logic specific to the said at least one avionics system to which the said state indicator of the said communication medium contributes if the latter is relevant.

8. Device in an aircraft comprising means suitable for the implementation of each of the steps of the method according to any one of the preceding claims.

Fig. 1a

Fig. 1b

115-1-Erreur-Fn1

115-1_Invalide

115-1_Alert-Fn1

205

CHEM(105-1, 105-3)_KO

220

230

CHEM(105-1)_KO

210

225

CHEM(105-1, 105-2)_KO

215

## Fig. 2

FWS 1    320-1

305-3

310-3-2

310-3-1

310-7-1

310-5-1

310-7-2

305-5

305-7

310-5-1

SEPDC1

LGERS3

315-2    Fig. 3    315-1

Fig. 4a

```
        ┌─────────────────┐
        │    Réception    │
        │  messages de    │─── 450
        │     panne       │
        └─────────────────┘
                 │
                 ▼
        ┌─────────────────┐
        │  Détermination  │─── 455
        │  statut du média│
        └─────────────────┘
                 │
                 ▼
        ┌─────────────────┐
        │   Evaluation du │─── 460
        │ statut du système│
        └─────────────────┘
                 │
                 ▼
420              ◇
 ⬠    ┌─── Conditions alarmes ─── 465
      │    = statut système ?
                 │
                 ▼
        ┌─────────────────┐
        │ Activations alarmes│─── 470
        └─────────────────┘
```

# Fig. 4b

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SAGASPE L. et al.** *Safe allocation of avionics shared ressource,* 2005